# EUROPEAN PATENT APPLICATION

(11) **EP 2 120 208 A1**
(43) Date of publication of application: **18.11.2009**
(21) Application number: 08008791.9
(22) Date of filing: 13.05.2008
(51) Int. Cl.: G06T 7/00

(54) **Method and system for lesion segmentation**

(71) Applicant: IBBT vzw, 9050 Gent (BE); Barco NV, 8500 Kortrijk (BE); Agfa HealthCare NV, 2640 Mortsel (BE); VRIJE UNIVERSITEIT BRUSSEL, 1050 Brussel (BE)
(72) Inventor: Deklerck, Rudi, 1800 Vilvoorde (BE); Markova, Aneta, B-1200 St. Lambert Woluwe (Brussels) (BE); De Mey, Johan, 1700 Dilbeek (BE); Clerinx, Peter, 3830 Wellen (BE); Poole, Ian, Edinburgh EH15 1NB Scotland (GB); Dewaele, Piet, 9100 Sint-Niklaas (BE); Temmermans, Frederik, B-9250 Waasmunster (BE)
(74) Representative: BiiP cvba

(57) **Abstract**

The present invention is related to a method and system for acquiring information on lesions in dynamic 3D medical images of a body region and/or organ. The method comprises the steps of :
- applying a registration technique to align a plurality of volumetric image data of the body region and/or organ, yielding multi-phase registered volumetric image data of the body region and/or organ,
- applying a hierarchical segmentation on the multi-phase registered volumetric image data of the body region and/or organ, said segmentation yielding a plurality of clusters of n-dimensional voxel vectors of the muiti-phase aligned volumetric image,
- determining from the plurality of clusters a cluster or set of clusters delineating the body and/or organ,
- identifying the connected region(s) of voxel vectors belonging to the body region and/or organ,
- refine/fill the connected region(s) corresponding to the body region and/or organ
- reapplying the segmentation step to the refined/filled connected region(s) corresponding to the body region and/or organ, to obtain a more accurate segmentation,
- acquiring information on the presence of lesions in a cluster or set of clusters of said plurality of clusters.

## Description

### Field of the Invention

The present invention generally relates to the field of methods and devices for visualising medical image data of an examination volume in order to detect lesions.

### Background of the Invention

Nowadays, a standard way to assess certain pathologies and especially tumours in liver, is to use a four-phase contrast enhanced computer tomography (CT) protocol. This means that in one study four volumetric data sets are obtained : one before contrast injection and three after, when contrast agent is present at the hepatic artery, the portal vein and the hepatic vein. In general the contrast is the best at the portal-venous phase. In order to make a diagnosis the radiologist has to go through these four data sets and visually compare the lesions at corresponding positions by selecting the appropriate slices in each of the volumes individually. Once a tumour is discerned, its diameter will be measured according to the RECIST (Response Evaluation Criteria In Solid Tumours) criterion, i.e. in the axial slice where it reaches its largest value. Needless to say, this is a time-consuming task, requiring strict attentiveness to avoid medical errors. The situation becomes even worse when several longitudinal studies have to be assessed for follow-up after chemotherapy or radiotherapy.

Such problems occur in studies involving abdominal organs (e.g., liver, kidney, pancreas, spleen, ...), or a lung or brain, ... acquired by volumetric CT or other volumetric imaging modalities (Magnetic Resonance, Positron Emission Tomography (PET), Single Photon Emission Computed Tomography (SPECT), ulrsound (US) ...).

Patent application US 2007/230761-A1 relates to a method and device for visualizing a sequence of tomographic image data records of an examination volume that has been recorded at a time interval from one another. In order to register the image data records with one another the body regions and/or organs to be examined in said image data records are first segmented in a segmentation module. However, this approach of first segmenting each phase and then reconciling the segmentations in a registration suffers from some drawbacks. Low-contrast may make the segmentations erroneous or even impossible (e.g. for the blanco phase, that serves as reference phase), hence further operations (like registration) are affected as well.

In patent application W02007/053676-A2 a method and system for liver lobe segmentation is disclosed. The system comprises a liver segmentation unit that accepts a liver CT volume as input and generates a liver mask. A segmentation of the liver mask is provided to divide the liver into several segments based on the previous segmentation results and possibly on landmarks on the liver. The method is only devised for single-volume data.

Patent application W02006/054194-A2 relates to a diagnostic imaging system. The imaging system includes imaging modalities such as a PET imaging system and a CT scanner. The CT scanner is used to produce a first image which is used for primary contouring. The PET system is used to provide a second image, which provides complementary information about the same or overlapping anatomical region. After first and second images are registered with one another the first and second images are concurrently segmented to outline a keyhole region. The keyhole portion of the second image is inserted into the keyhole of the first image.

### Aims of the invention

The present invention aims at providing a method and system for lesion segmentation that overcomes the problems of the prior art solutions.

### Summary of the Invention

The present invention aims to provide a method for acquiring information on lesions in 3D medical images comprising a body part and/or organ. The method comprises the steps of
- applying a registration technique to align a plurality of volumetric image data comprising the body part and/or organ, yielding multi-phase registered volumetric image data comprising the body part and/or organ,
- applying a multi-dimensional segmentation on the multi-phase registered volumetric image data, said segmentation yielding a plurality of clusters of multi-dimensional voxel vectors of the multi-phase registered volumetric image data,
- identifying the body part and/or organ as at least a part of a cluster or of a set of clusters of the plurality of clusters of multi-dimensional voxel vectors,
- acquiring information on lesions in the identified body part and/or organ.

In a preferred embodiment the step of applying a segmentation further comprises a step of optimizing the segmentation into said plurality of clusters. This optimisation may advantageously be performed via a multi-dimensional expectation maximisation algorithm.

Preferably the step of applying a multi-dimensional segmentation is repeated for obtaining a refined segmentation. Advantageously morphological operations and/or active contours are applied on the result of the previous segmentation step before the segmentation is repeated.

In a preferred embodiment the method further comprises the step of selecting a region of interest for further analysis. Advantageously this selection is based on the acquired information on lesions in the body part and/or organ. The method then advantageously comprises the step of defining a viewport around that region of interest for visual assessment. In a preferred embodiment the region of interest in the viewport is visualised at regular intervals or in an interactive fashion. Further a step can be performed of selecting a predefined prototypical profile to compare the selected region with. The further analysis typically comprises geometric analysis and/or radiometric analysis. The geometric analysis advantageously comprises determining of said lesions the volume, diameter or perpendicular diameter. The radiometric analysis may comprise determining an intensity perfusion profile. The selected region of interest can advantageously be linked to a corresponding region of interest in a previous study.

In a specific embodiment the selected region of interest comprises at least one spatially disconnected segment belonging to the organ or body part.

The step of applying a multi-dimensional segmentation is preferably performed with a multi-dimensional watershed algorithm.

In another preferred embodiment image data of at least two phases are combined.

In another aspect the invention relates to a program, executable on a programmable device containing instructions, which when executed, perform the method as previously described.

In a further aspect the invention relates to a picture archiving and communication system suitable for acquiring information on lesions in 3D medical images of a body region and/or organ. The system comprises registration means for multi-phase registration of volumetric image data comprising the body part and/or organ and a segmentation unit for performing a multi-dimensional segmentation of the registered volumetric image data.

In a preferred embodiment the system further comprises visualisation means arranged for displaying the registered volumetric image data.

### Brief Description of the Drawings

Fig. 1 represents a block scheme of the method according to the present invention.

Fig. 2 illustrates the 2D joint-histogram built on 2 phases and the position of some tissue clusters in this joint histogram. Higher dimensional joint-histograms cannot be displayed in a graphical way.

Fig. 3 illustrates the selection of a spatially disconnected region corresponding to the liver.

Fig. 4 illustrates a different intra-study phases of the liver.

Fig. 5A and Fig.5B illustrate different images before and after registration.

Fig. 6 illustrates a viewport around a lesion.

Fig. 7 shows time plots of the contrast enhancement measured for a number of voxels in the different phases.

Fig. 8 illustrates the result of a first segmentation.

Fig. 9 illustrates the improved result obtained with a segmentation by applying a 4-dimensional EM algorithm.

Fig. 10 illustrates a segment corresponding to liver tissue.

Fig. 11 illustrates a filled segment corresponding to liver tissue.

Fig. 12 illustrates the 3D convex hull of the segment corresponding to liver tissue.

Fig. 13 illustrates an improved liver mask.

Fig. 14 illustrates a 2D joint histogram segmentation on the refined filled liver mask.

Fig. 15 illustrates the improved segmentation result after applying a 4D-EM algorithm on the segmentation shown in Fig. 14.

### Detailed Description of Embodiment(s)

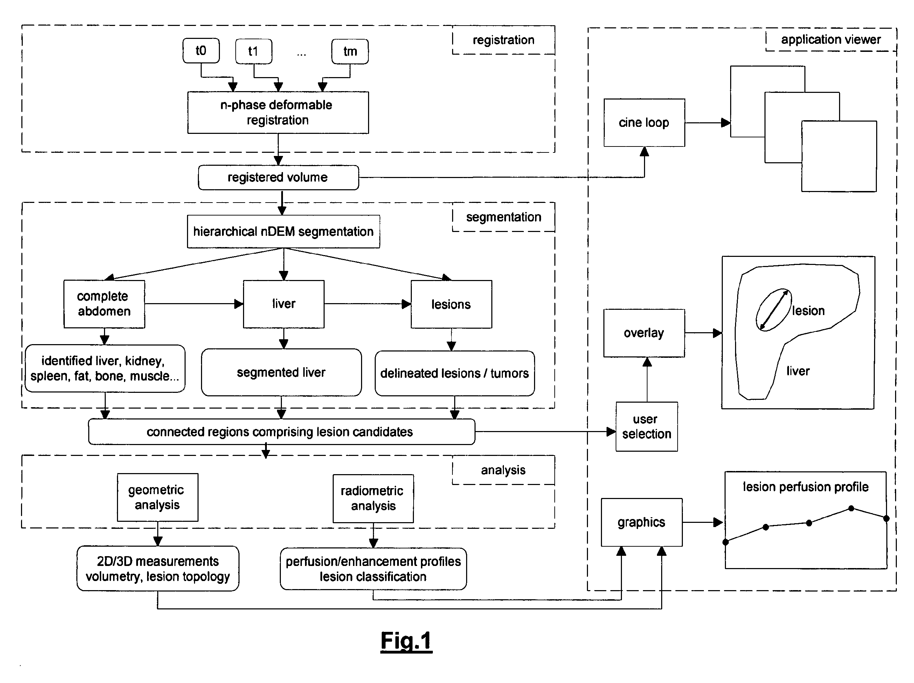

The present invention relates to a method for automatic lesion segmentation, given multiphase dynamic contrast multislice (3D) CT datasets. A particular application of the invention relates to liver lesions. However, upon reading the description below it will be apparent to the skilled person that the invention is in no way limited to liver segmentation. The invention further relates to the processing of the resulting data via user interaction. The block scheme shown in Fig.1 gives an overview of the method of this invention. The present invention overcomes the problems of the prior art solutions by considering multi-dimensional segmentation of aligned multi-phase data.

### Registration

The system first brings different phases *t₀*, *t₁*, ..., *tₘ* of a single study into correspondence with each other via a global deformable (i.e. non-rigid) registration technique. The proposed approach can be applied to an inter study, wherein various phases are compared obtained at different points in time (days, weeks, months, ... in an inter study vs. a matter of seconds or minutes in an intra study). In an inter study typically a number of landmarks need to be detected, whereas in an intra study the coordinate frame of the scanner can be used to relate the initial position of the phases to be registered.
One phase is chosen as a reference. Typically the phase with the largest contrast enhancement, i.e. venous phase, serves as reference. The other *m-1* phases are brought into alignment with this phase. The number of phases *m* is typically between two and four, but can be larger. The alignment may for example be performed by a deformable registration technique maximizing the mutual information. As a result this step yields a set of registered volumes. A deformable registration technique allows local deformations of the study, to account, for example, for different patient positioning between scans or for different levels of breathing.

The registered volumes enable the user to perform a synchronized browsing through all the phases at the same time : the user can select a particular slice in a certain phase and the system automatically identifies the corresponding slices of the other phases and replaces the slices currently displayed for these phases on a workstation.

The registered volumes further allow the user to define a viewport around a lesion and to loop through the corresponding slices of the phases of the study. In this loop-mode the content of the initial slice outside the viewport remains unchanged, while the content inside the viewport is updated interactively by the user or at regular intervals as in a cine-mode. By cine-mode is meant that slices are visualised one after the other with a speed high enough for the eye to experience them as a movie. In this way the user can focus on one spot (i.e. the viewport) to visually assess the enhancement of the lesion. The enhancement (i.e. improved interpretability) of one or more selected voxels, or an average enhancement in a neighbourhood around the selected voxels or of the segmented lesion can be assessed from a graphic. On the plot, the user may choose any number of prototypical enhancement profiles, characteristic for the known lesion types, against which he can compare the enhancement of the selected voxel(s) or segmented region.
Even though a full non-rigid registration is computed, in all situations where 2D projections are shown to the user, the images can either be warped so that they fully align on a per pixel level throughout the image (or selected viewport), or it is possible not to warp the images and only shift them so that they are aligned at the centre (or selected viewport). This is a global user option and can be applied in all cases where aligned image data are shown to the user.

### Segmentation

Typically off-line a hierarchical n-dimensional pattern space segmentation is performed, whereby n is in the range from 1 to *m*, the number of phases. An appropriate number of clusters is determined by analysing a n-dimensional joint histogram/pattern space defined by the m densities or defined by a combination of the m densities resulting in n (≤ m) derived densities of the registered voxels, thus defining n-dimensional density vectors. For example the clusters can be found by means of a (n-dimensional) watershed algorithm as hill-tops in the inverse joint histogram landscape. Two or more phases can be combined at the voxel level by some mathematical operation (e.g. averaging or principal component analysis) to yield the derived densities, thereby reducing the dimensionality from m to n, as already mentioned. Optionally, the number of clusters *k* can be determined automatically by first performing an initial clustering and then selecting the initial clusters which contain more than a predetermined percentage of the voxels (for instance 1 %) and grouping all the remaining initial clusters which are below this threshold into one extra cluster.

Optionally, a further optimization of the *k* identified clusters can be performed. In such optimization step initial values of the statistical parameters estimated from samples of the n-dimensional (derived) density vectors of the registered voxels for the statistical distributions (e.g. multivariate Gaussian distributions) associated to each of the k clusters, previously identified in the n-dimensional pattern space, are further optimized to provide improved distributions and weights. This optimisation can e.g. be accomplished via a maximum likelihood approach like the expectation maximisation (EM) algorithm. The EM algorithm has extensively been described and discussed in the literature (see e.g. 'A gentle tutorial of the EM algorithm and its application to parameter estimation for Gaussian mixture and hidden Markov models', J.A.Bilmes, ICSI-TR-97-021, 1997). Alternatively, a trust region algorithm can be applied, which also is an algorithm well known in the art.

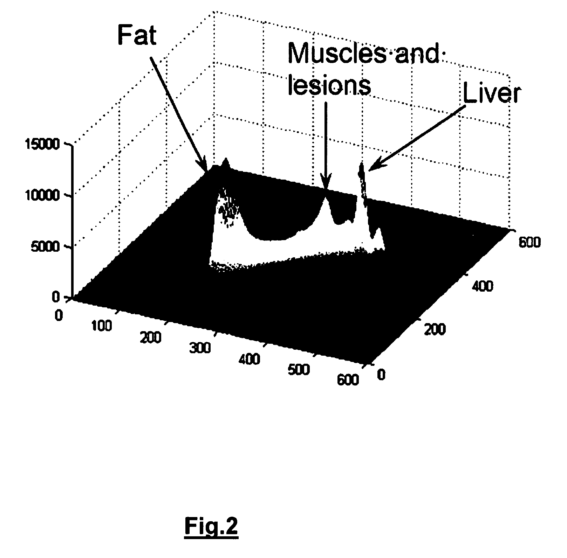

Having performed the segmentation into k clusters, the various clusters (and the voxels contained therein) are each attributed to a class corresponding to a tissue. This can be done either by attributing them the label of the watershed region or cluster, into which their derived n-dimensional pattern vector falls, or by attributing them the label of the cluster, for which the n-dimensional density vector to which they belong, achieves its maximum fuzzy membership or probability. A class may comprise a single cluster or several clusters. Fig.2 gives an illustration. A possibility is to use the maximum likelihood classification performed by the expectation step of the EM algorithm for the Gaussian clusters found in the maximisation step of the EM algorithm.

Such a segmentation approach does not need to be trained, which is a substantial advantage since the enhancement in grey value in the different phases depends on quite a number of variables (physical condition of the patient - a young sportive patient has a much higher perfusion rate in rest than an old inactive patient-, stress, failure to inject the right amount of contrast medium due to the bad quality of the arteries in elder patients, etc.). Yet, as addressed next, the clusters resulting from the segmentation still need identification.

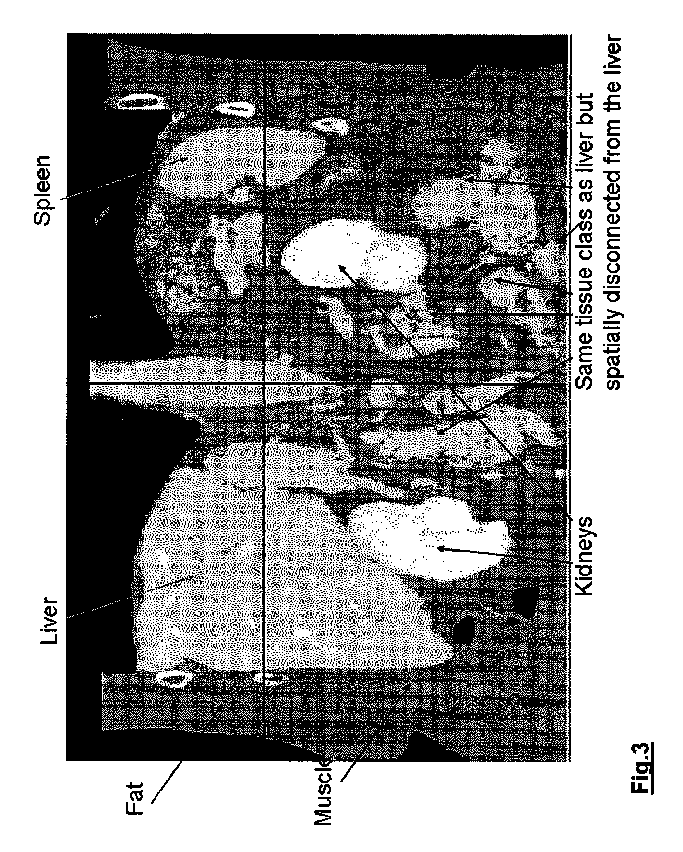

The above described segmentation approach is applied in a hierarchical fashion. This means that it is first applied to the whole abdomen in order to make a distinction between the tissues belonging to fat, muscle, liver, spleen, kidney, bone. In Fig.2 fat, the liver and muscles and lesions can be discerned. Note however that a class corresponding to a tissue, may give rise to multiple spatially disconnected 3D regions. A region on its own is a set of spatially connected voxels. Therefore, from the above described segmentation approach one or more spatially disconnected 3D regions belonging to the organ or body part of interest (e.g. the liver) are selected automatically based on relevant size, position and grey value criteria (see Fig.3). The organ (or body part) may have a centre of gravity that lies in a specific part of the image volume (e.g. the centre of gravity of the liver is situated in the lefthand part) and be characterized by a specific greyvalue distribution. After a slight morphological erosion (which is a well known operation in mathematical morphology) the connected 3-dimensional region satisfying the geometric and greyvalue criteria is selected as the organ or body region of interest. This allows automatic detection of the organ (e.g. the liver).

The identified 3D region of interest is then filled via a morphological closing operation with a large spherical mask. Also closing is a well known operator in the field of mathematical morphology. Optionally the parts (lesions, veins) not belonging to the healthy organ tissue of interest can be dilated, while keeping the healthy tissues unchanged. This step may facilitate the interactive segmentation of lesions that are lying at the boundary and that are penetrating into tissues surrounding the organ. Optionally the boundary of the organ or body part of interest can be further refined by computing and processing its convex hull. For instance, a ribbon corresponding to the convex organ boundary can be extracted from the convex hull and added to the mask. Concave parts resulting from the morphological closing operation and not being lesions can be eliminated. For example, in the case of the liver the concave part that is situated around the portal vein can be eliminated from the mask.

The segmentation approach is then applied a second time to the multi-phase data only pertaining to the filled refined organ or body part mask, leading to a more accurate delineation of the organ or body part and its lesions. In order to make a good distinction between necrotic, active and vessel areas inside the tumours, the segmentation approach may be repeated a third time at the lesion-level, in case the areas are of sufficient size. If the area is small (e.g. 20 voxels) the joint histogram should be smoothed (e.g. by summing B-spline kernels centred at each pixel), before the watershed algorithm can be applied for determining the clusters. Invoking the segmentation a third time can be a preferred option when the user is interactively selecting or further processing the lesion candidates. As a last step morphologically based partial volume filtering of the voxels employing a spherical structuring element of a size of about 1 mm, can be applied. This results in some boundary voxels being assigned a null classification and thence excluded from further consideration.

Spatially connected (3D) regions of voxels of the same class are identified in the filled refined organ (or body part) mask, which results in a plurality of regions (maybe 10 to some hundreds).

### Further data processing

Once the segmentation operation is terminated, the lesion candidates can next be processed interactively. The user can view data in multi-planar reconstruction (MPR) slices, typically aligned transverse, sagitally or coronally. Usual tools like zoom and window levelling per phase are available. On a single key-stroke the user can rapidly cycle through the m phases of data. He can choose to view either the registered (i.e. warped) or unregistered data. In the latter case the system is capable of shifting the data to maintain registration of the centre of the current view(s). The segmentation result can be displayed as transparent masks on top of the images or the contours derived from the segmentation mask can be put in overlay. Alternatively the user may choose to hide these boundaries or transparent masks since they may interfere with the reading.

On finding a lesion of interest, the user clicks and applies some delineation (e.g. dragging a circle, defining a rectangle, ellipse, polygon, freehand curve, smooth spline) encompassing all of the lesion on that slice. From the k automatically segmented spatially connected regions those regions are selected whose 2D projections are fully contained within the delineated areas. Those regions are merged into a single 3D object, which constitutes the lesion of interest. In case this object is disconnected in 3D, the largest by volume is selected as the preferred candidate region. Via an extra click the user may select another disconnected region.

After viewing the segmented lesion the user can decide to accept a region if it corresponds well to a tumour or a lesion. The region can then be stored.
Alternatively the user can choose to make corrections. This can be done by modifying the first delimitation or by indicating another delimited area, possibly on another slice along the same direction or in perpendicular slices, or by adding further regions whose two-dimensional projection into the viewed plane are fully contained within the delimited area. The user may also indicate another delimited area, while holding down a modifier key, to remove any regions whose two-dimensional projection into the viewed plane are fully contained within the delimited area.

Optionally, in case no satisfactory result is found, he may invoke an active contour to refine (the boundary of) the segmented lesion or he may invoke the previously described 2-step segmentation approach in a 3D region of interest he delimited.

The 3D segmented lesion can be displayed in a number of ways, for example as an outline on MPR views, as a tint on MPR views or as a 3D volume rendering, with non-lesion material shown semi-transparent.

Once the lesions have been successfully segmented and identified, a geometric and radiometric analysis can be performed. The geometric properties of the lesions such as whole volume, largest diameter in transverse slice as per RECIST measurement, largest perpendicular diameters [(a) in coronal or sagittal planes or (b) in 3D oblique planes] , shape features (e.g. circularity or sphericity) ... may be computed. At a key stroke a view may snap to the transverse slice at which the RECIST measurement was taken, with an annotation showing the measurement line. Also the volumes of the sub-areas, e.g. the necrotic, vessel and active tumour areas may be determined on the basis of their perfusion characteristics (e.g. necrotic areas show little enhancement, vessel show rapid enhancement, ...). Further, as to the radiometric analysis, the perfusion characteristics can also be computed for the complete lesion, as well as for the sub-areas or at the voxel-level and plotted in a graph, where they may be compared with prototypical profiles (e.g. via a Euclidean distance measure) derived for known types of lesions. This line graph shows the phases with phase number (1-*m*) on the horizontal axis and average HU (Hounsfield Unit) HU within the lesion or its subregion for each phase on the vertical axis. The point for the currently viewed phase is highlighted. When the cursor hovers over one of the points, the name of the phase (e.g. 'venous'), the mean and standard deviation of densities (HU) in the region are displayed in a pop-up window. Prototypical profiles can be put in overlay.

### Example

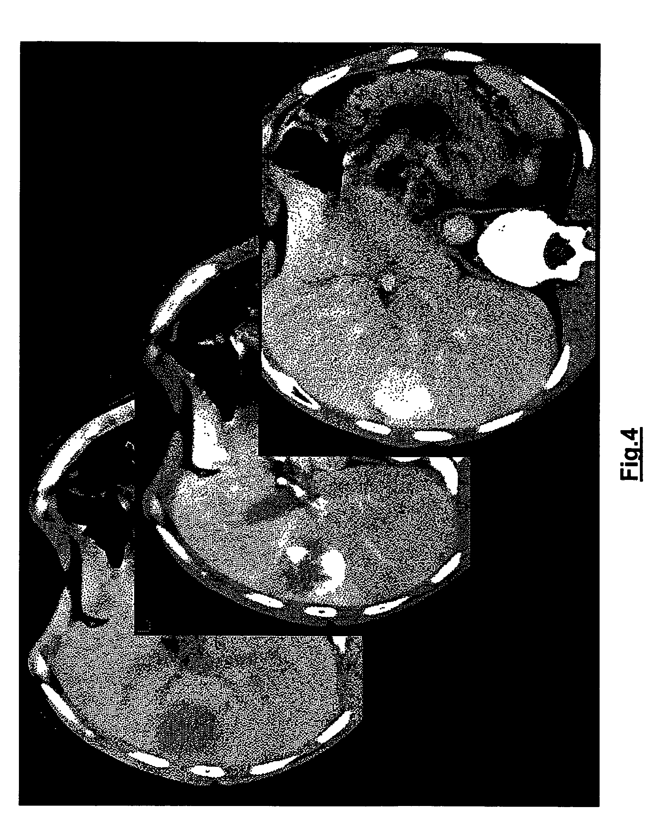

By way of example the application of the method of the invention to the liver and liver lesions is now described. The system and method of the invention can indeed advantageously be applied for analyzing multi-phase volumetric CT liver studies. The proposed approach greatly simplifies the state of the art diagnostic procedure for one or more longitudinal multi-phase studies by enabling the radiologist to synchronously assess a lesion over all phases and across longitudinal studies, by suggesting delineations obtained via automatic segmentation techniques, which simultaneously exploit the information in all the phases, and by providing accurate 3D measurements, such as the volume of the liver and the individual lesions and its changes in time, the longest diameter in 3D, the liver segment where the lesions are situated etc. Fig.4 shows a different intra-study phases (without contrast enhancement: blanco at t=t0; with contrast enhancement: venous-portal at t=t2, venous at t=t3).

### Registration

As already set out above, the system brings the different phases at the intra-study or inter-study level into correspondence with each other via a global deformable registration technique. The deformations projecting a scan onto its baseline scan are defined on a sparse regular grid of N³ control points. The deformation at a point may be obtained by applying a third order B-spline interpolation kernel to the deformation estimates at the neighbouring control points. A coarse deformation with N=8 points is first estimated, followed by a fine registration with N=14 control points. The optimal transformation can be estimated by maximizing the global mutual information between volume pairs. Registration optimization may be performed by a limited memory Boyden-Fletcher-Goldfarb-Shanno (L-BFGS) optimizer, which performs well when dealing with high dimensionality problems.

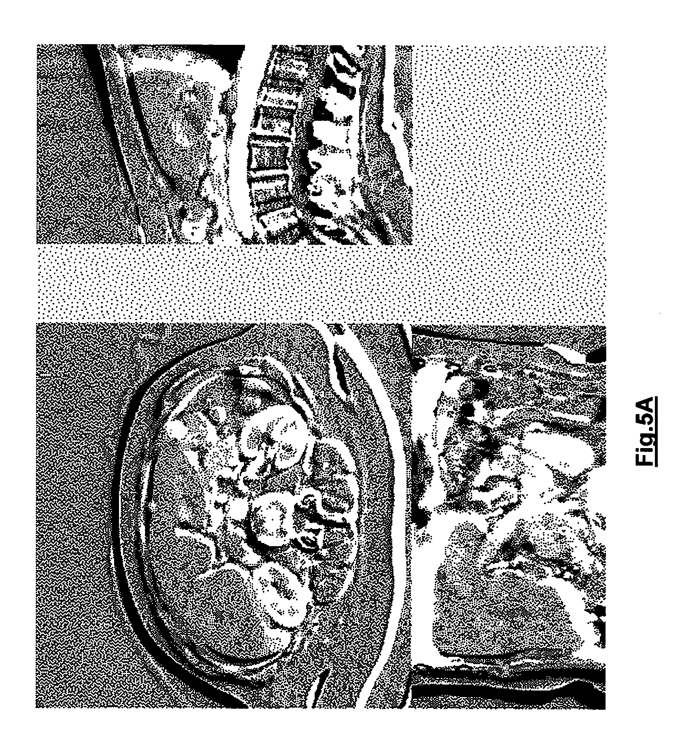

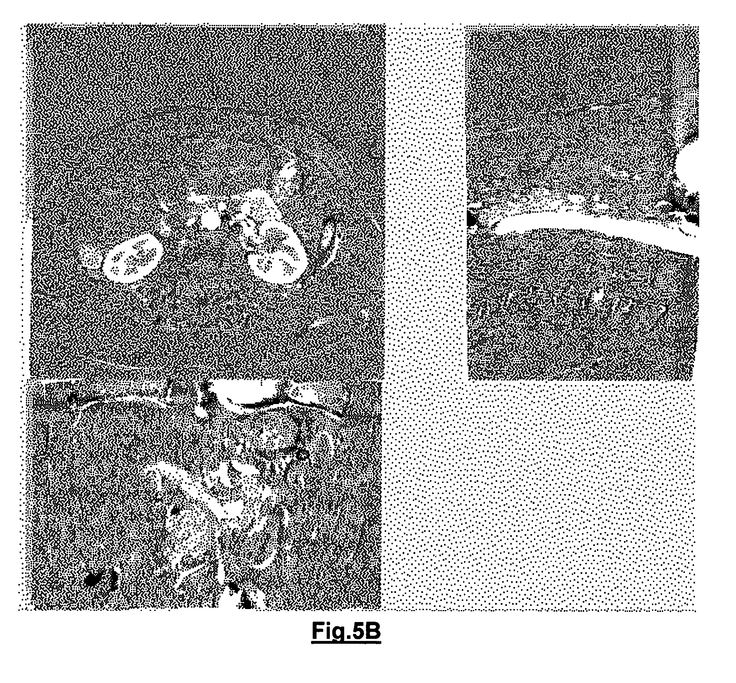

Fig.5A and 5B show some images before and after registration, respectively. The white and black gaps before registration are due to misalignment. After registration they have disappeared, as the data are then aligned.

Once the registration has been accomplished, it suffices for the user to select a particular phase of a particular slice and automatically the corresponding slices of the other phases and of the same or other longitudinal studies are identified and replace the slices currently displayed for these phases on the workstation.

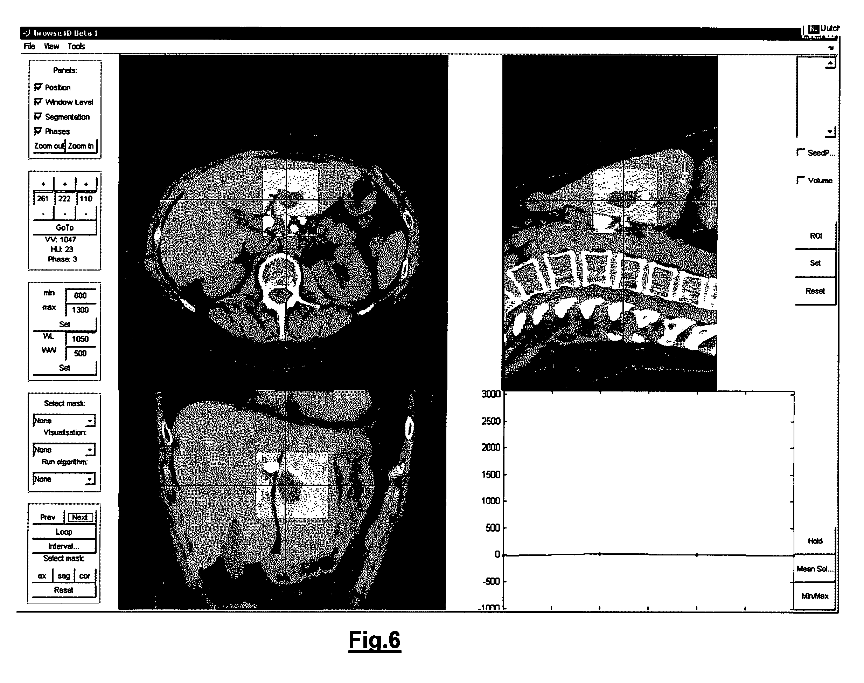

The system enables the user to define a viewport around a lesion and to loop through the corresponding slices of the phases of the study, as illustrated in Fig.6. In this loop-mode the content of the initial slice outside the viewport is kept, while the content inside the viewport is updated interactively by the user or at regular intervals as in a cine-mode. In this way, the user can focus on the viewport to visually assess the enhancement of the lesion. Even though a full non-rigid registration is computed, in all situations where 2D projections are shown to the user, the images can either be warped so that they fully align on a per pixel level throughout the image (or selected viewport), or it is possible to not warp the images and only shift them so that they are aligned at the center (or selected viewport). This is a global user option and can be applied in all cases where aligned image data are shown to the user.

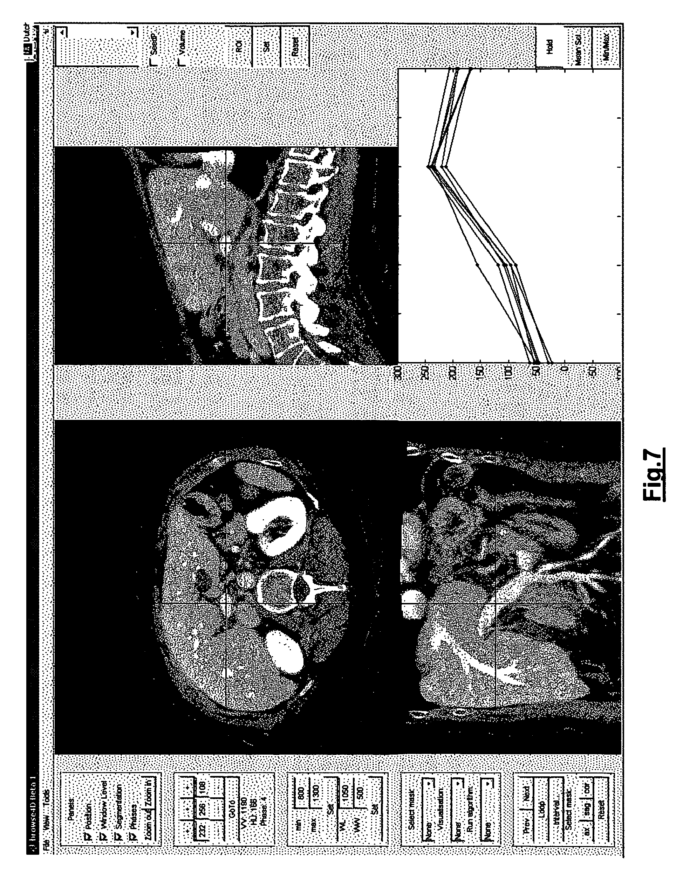

The enhancement of one or more selected voxels, or an average enhancement in a neighbourhood around the selected voxels or of the segmented lesion can be assessed from a graphic. Fig.7 shows the contrast enhancement of selected voxels at each phase. For the measurements along the phases the warped data will be used.

### Segmentation

The system performs a first automatic segmentation at the voxel-level taking into account all the phases of a single study. The result of the segmentation is displayed as transparent masks on top of the images or the contours derived from the segmentation mask can be put in overlay. By analyzing the nD (n can be 1, 2, 3, or 4) joint histogram of a number of the phases directly or after transformation (e.g. subtraction, principal components analysis), an appropriate number of clusters and corresponding objects can be found automatically, by applying the watershed algorithm on the inverse joint histogram landscape (as in Fig.2). Only the clusters containing a significant number of voxels are kept (typically larger than 1 %). The remaining voxels are grouped in one extra class.

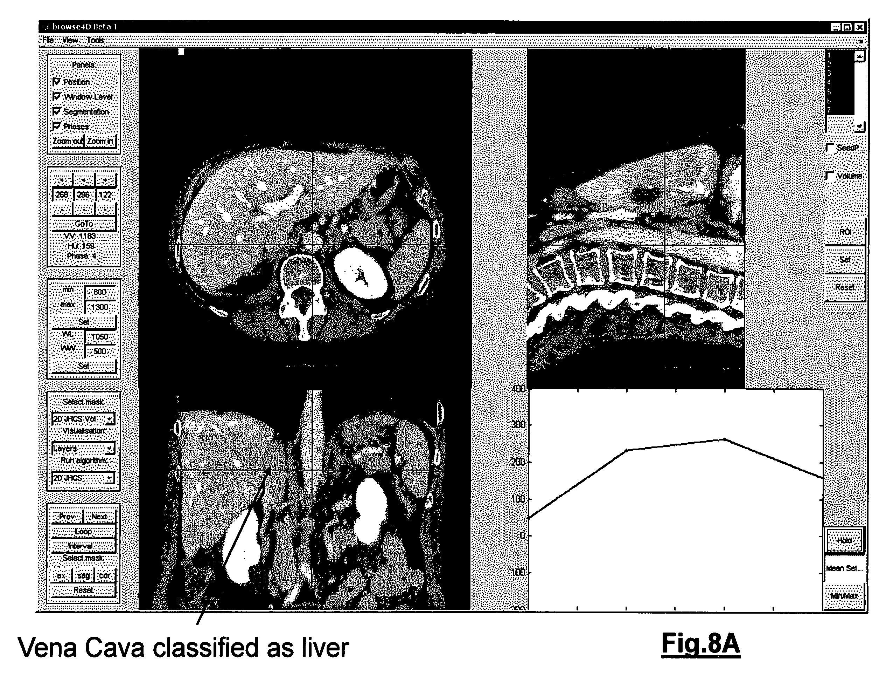

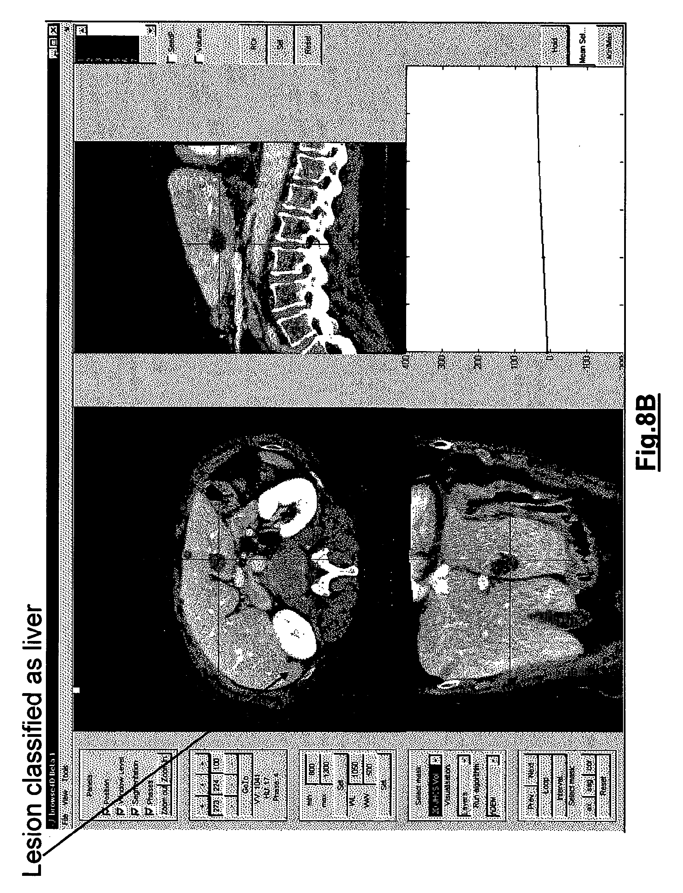

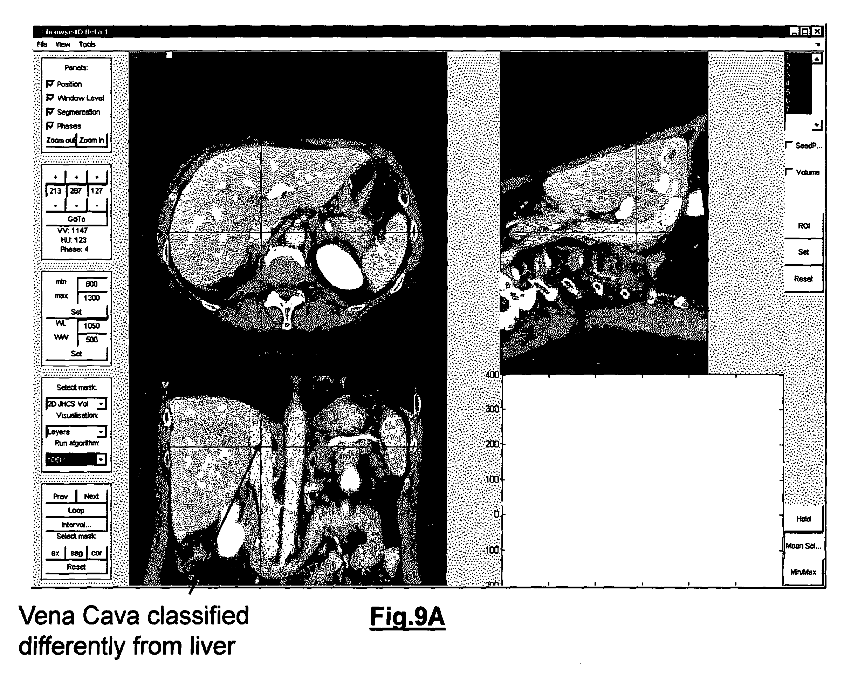

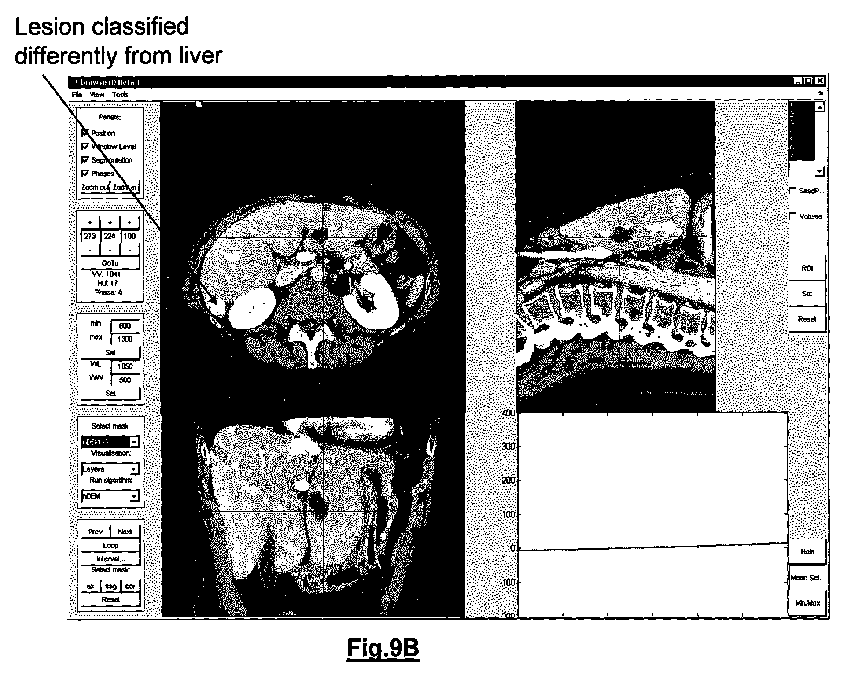

The segmentation progresses in a phased or hierarchical way. The segmentation can be further improved by applying a 4D-EM algorithm (as in this example there are four phases). The 4D-EM assumes that the 4D-intensity-vectors of the voxels in each cluster are distributed according to a 4D-multivariate Gaussian distribution. It finds the statistical parameters (mean vector, covariance matrix and weight) for each of these 4D-multivariate Gaussian distributions so that their sum is approximating the overall 4D-distrubtion (joint-histogram) optimally with a maximum likelihood approach. Initial values of the statistical parameters can be readily estimated from the sample intensity vectors of each of the detected clusters. Note that in Fig.8A the vena cava and in Fig.8B one lesion at the bottom of the liver are not detected, while they are recovered with the 4D-EM algorithm (see Figs.9A and 9B).

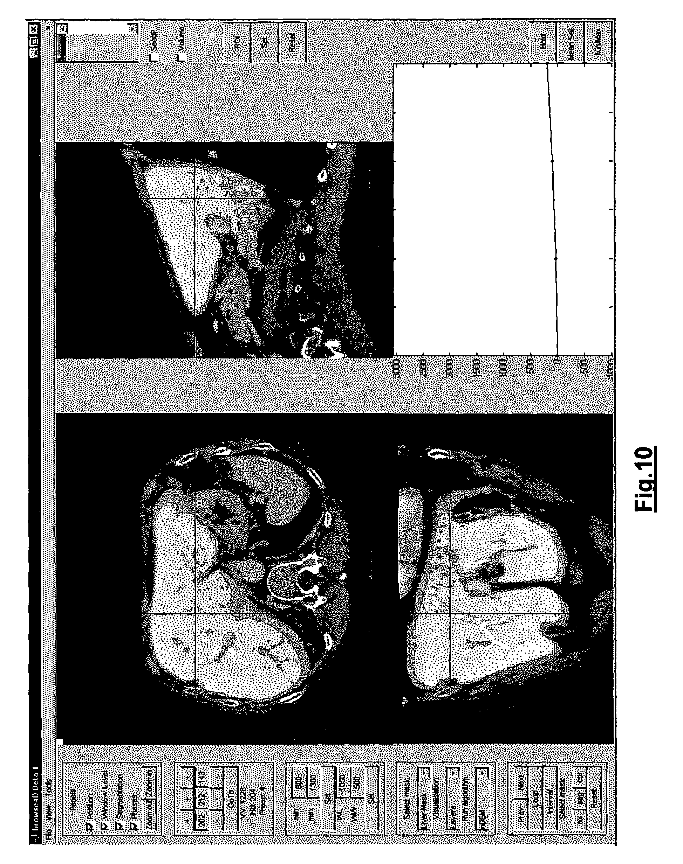

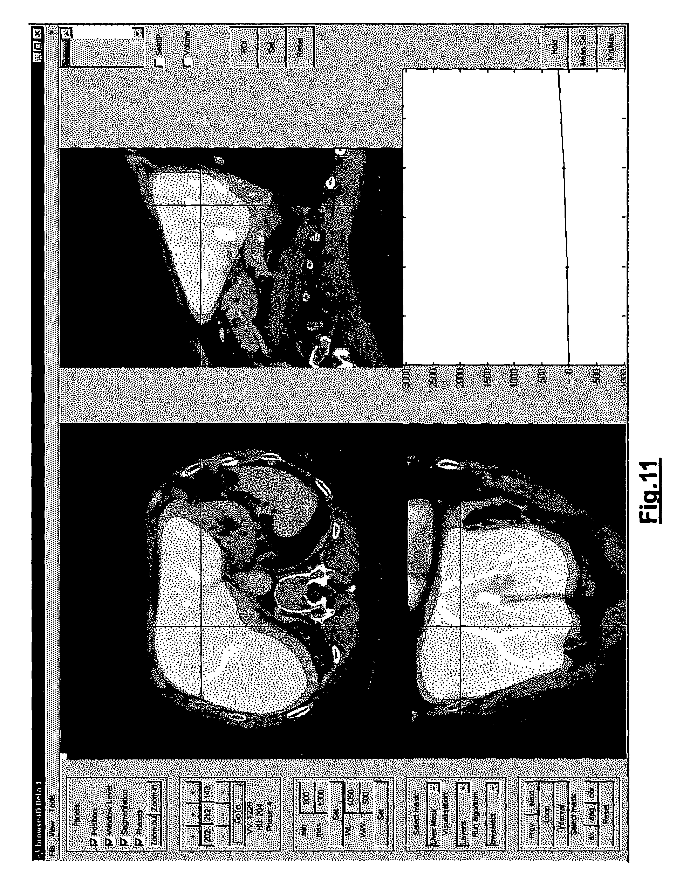

In case this global segmentation is satisfactory, it is possible to extract an approximate filled liver mask. First the region corresponding to liver tissue is selected (see Fig.10) either automatically based on relevant size, position and grey value criteria or interactively with the user interface, and eroded with a small erosion mask to disconnect it from other similar tissues. Next the 3D region corresponding to liver tissue is further processed, by using a large 3D morphological closing (typically with a spherical dilation mask of size 46-86 mm and a spherical erosion mask of size 45-54 mm), which in general fills the holes corresponding to lesions and vessels, and approximately respects the shape of the liver for lesions lying at the border. Fig.11 shows the filled 3D region.

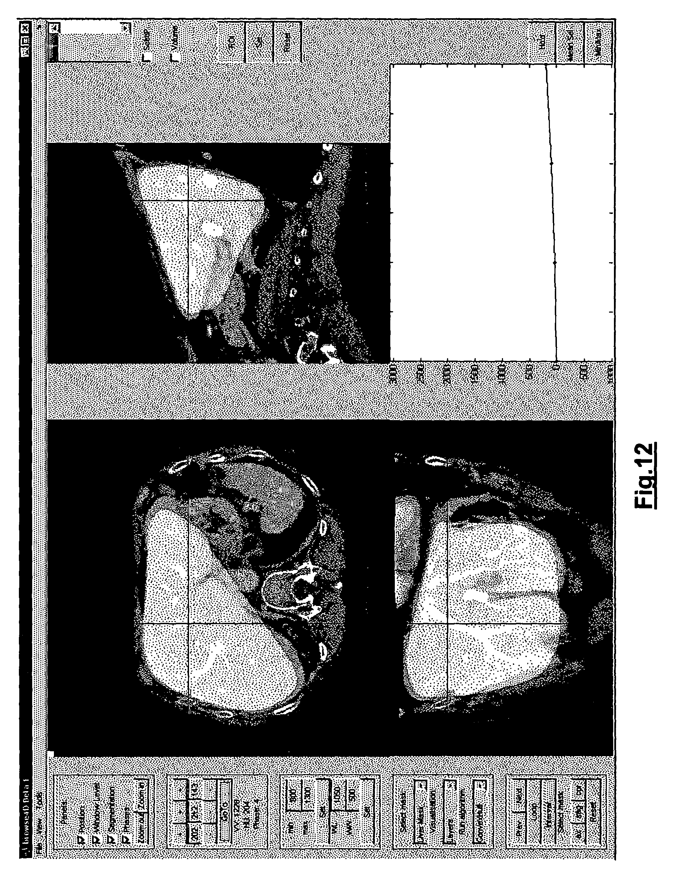

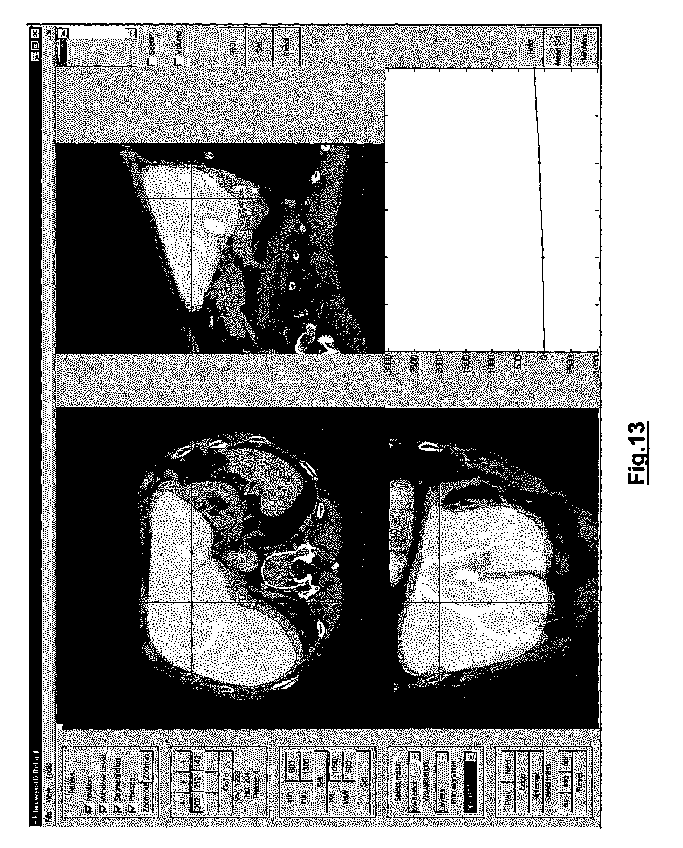

An alternative method to fill the liver mask is to compute the 3D convex-hull. The convex-hull (see Fig.12) is somewhat better approximating the convex liver boundary near the rib cage and the lungs in case there are lesions situated in those areas. However the concave part of the liver is largely over-filled. In order to keep only the convex liver boundary, the 3D convex-hull is eroded with an asymmetrical 2D mask with only the upper quadrant set to 1 of size 16.5 mm. The resulting mask is then subtracted from the 3D convex hull to obtain a ribbon corresponding to the convex liver boundary. This ribbon can then be combined with the filled 3D region corresponding to liver tissue, to obtain an improved mask as in Fig.13.

The large closing operation to generate the filled mask of Fig 11, always tends to fill a lesion gap at the boundary, in a concave way. By improving the mask with the ribbon corresponding to the convex liver boundary, this problem is solved for the convex part, while for the concave part of the liver boundary, the filling operation has the right property to approximate the boundary correctly.

However the concave part, in general will contain a region situated around the portal vein, which will be filled also due to closing operation with the large spherical mask. A possible approach to identify this region is to first define the edge of the convex-hull in the concave part: the filled mask can be subtracted from the convex hull and followed by an opening operation with a small kernel (typical equal to 7) to obtain the concave part, which is then intersected with the edge of the convex-hull. Next, the concave part itself is dilated with the same mask size as in the fill operation (i.e. 71) and this dilated mask is intersected with the filled mask. For this intersection the distance transform can be computed to the edge of the convex hull in the concave part and based on the histogram of the distances, kernels of the furthest lying voxels, not pertaining to the liver can be found.

To find the most concave parts of the filled liver mask, one could apply a growing strategy starting from the kernels towards the edge of the convex hull according to monotonically decreasing distances.

Yet some tumours lying at the liver border and protruding in tissues surrounding the liver will not be fully detected: i.e. the protruding part is missing by the proposed method. Therefore, it is useful to dilate the non-liver parts with a mask size equal to 8.5 mm, after first eroding them with a mask size equal to 3.5 mm to eliminate noise and irrelevant parts. The areas of the dilated non-liver parts that however protruded in the liver tissue, should be removed again by intersecting them with the liver tissue mask. This dilation of the non-liver parts is preferably done starting from the filled liver mask (avoids the removal of voxels in the convex part of the liver at the boundary of the convex hull in case the refined mask is used), then intersect it with the liver mask and add this intersection mask together with the ribbon corresponding to the convex liver boundary to the filled liver mask. This mask could then be further refined by removing the most concave parts.

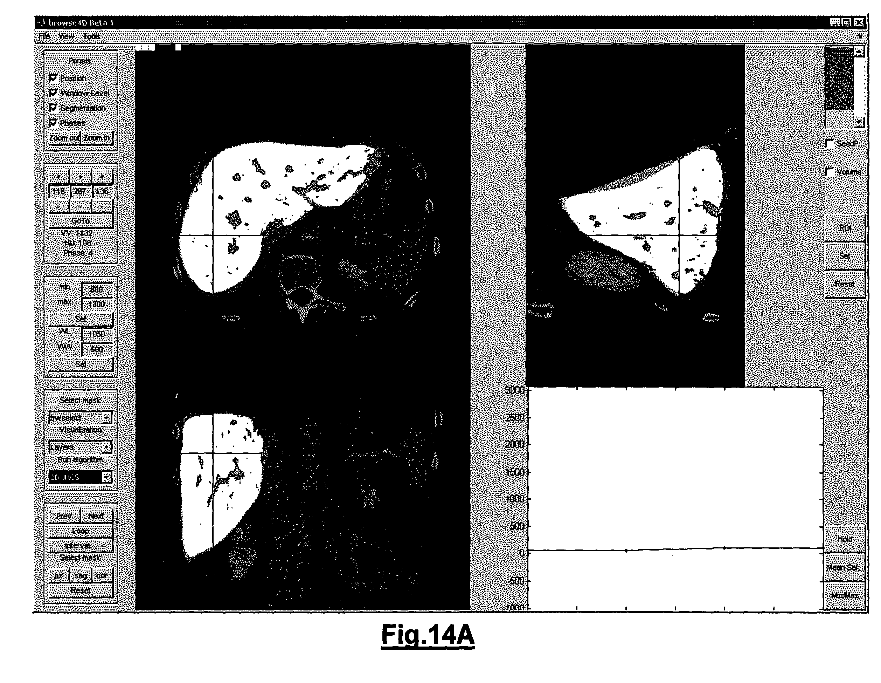

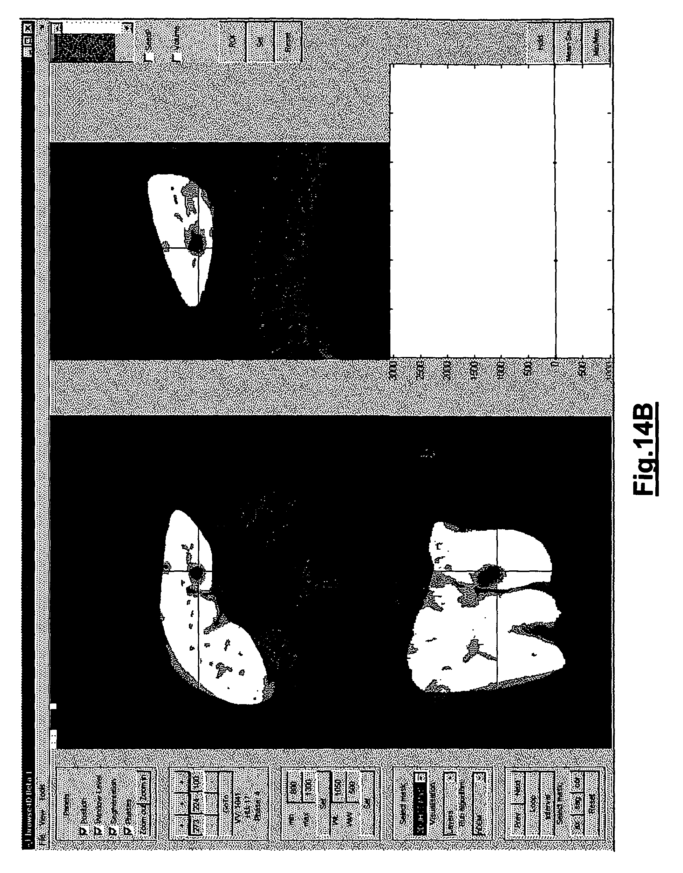

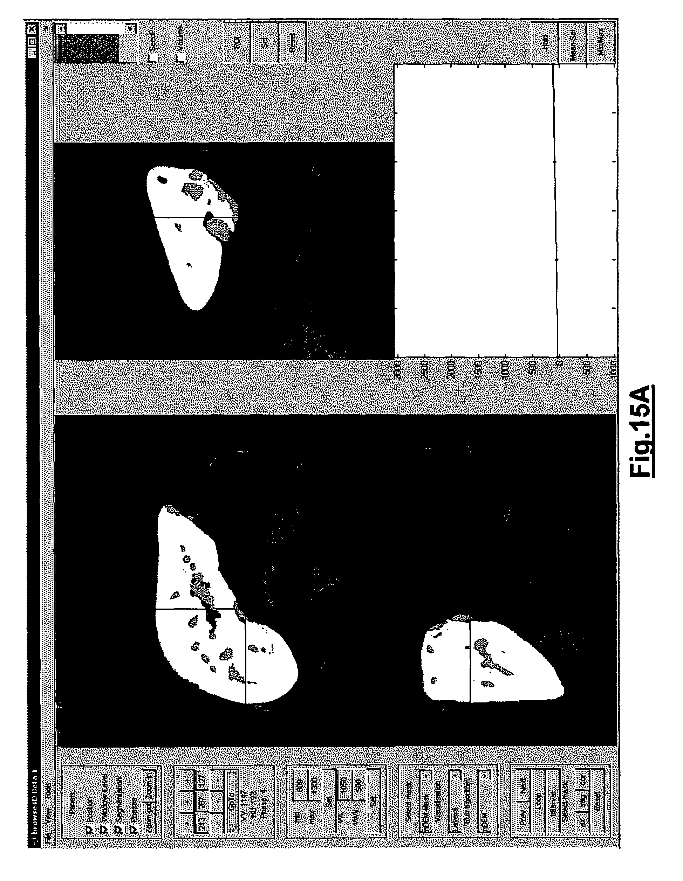

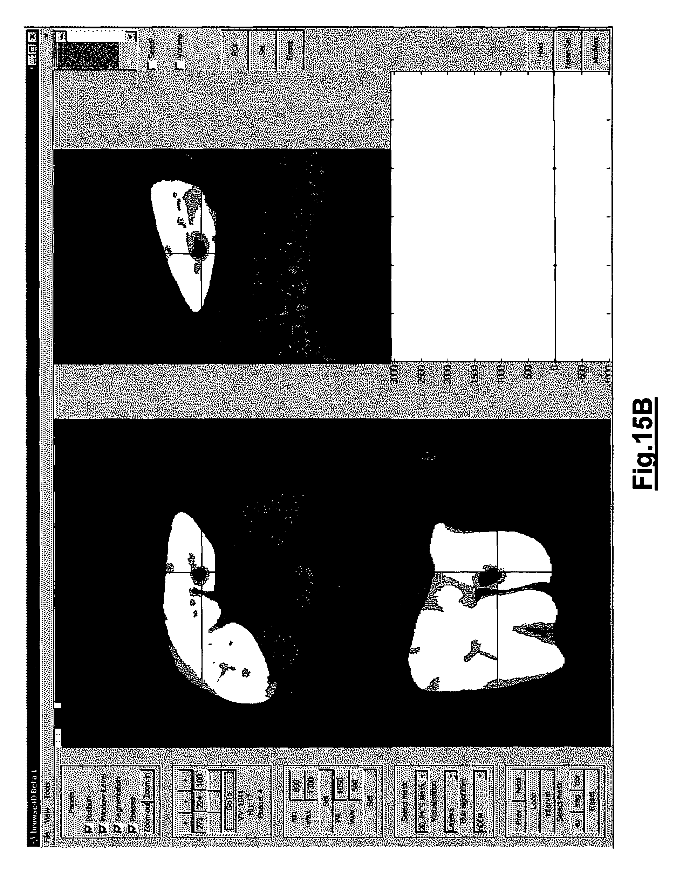

In a second phase the same segmentation approach (i.e. determining an appropriate number of clusters by the watershed algorithm of the nD joint histogram) and optimizing the resulting segmentation result via the 4D EM algorithm) can be repeated, by only considering the multi-phase data pertaining to the filled organ mask (Fig.14) refined with the ribbon corresponding to the convex liver boundary and/or with the dilated non-liver parts and/or with the concave part situated around the portal vein eliminated. This will lead to a more accurate delineation of the liver and its lesions, as shown in Fig.15 for the case wherein only a ribbon is added.

In order to reduce the processing time on a PC, the results of segmentation may be pre-computed and be loaded together with the registered image phases when the user selects the study in the system.

One might envisage to provide the user a number of liver masks, from which he can choose the one that yields the most optimal segmentation result. The user might even switch between liver masks on a per tumour basis and select the mask that provides the most optimal segmentation for the tumour he wants to segment.

To start the tumour segmentation, a good strategy is that the user selects the images corresponding to the best enhanced liver phase without the mask in overlay. He then browses through the images and clicks with the mouse inside the tumour region. By this click, the connected region at that position available in the mask is selected and shown on the images. In case this 3D region corresponds well to the tumour, the user can accept it and store it as tumour x in the annotation framework. In case the result is not satisfactory, the user may choose to toggle through the other masks and look if the regions corresponding to the clicked position are better and if so he can accept them. Sometimes a tumour could be divided in different classes. In that case the user could try to drag from the first clicked position to any other one inside the tumour region and see interactively, which other 3D regions become included as he is dragging. Again, he can stop dragging once he finds a satisfactory result and store it. In case no satisfactory result is found he may invoke a boundary refinement procedure based on an active contour or surface model.

As the user may be interested in making a good distinction between necrotic, active and vessel areas, he could repeat in case the tumour is of sufficient size, the aforementioned segmentation approach (i.e. determining an appropriate number of clusters by the watershed algorithm of the nD joint histogram) and optimizing the resulting segmentation result via the 4D EM algorithm). This may be very important to assess the evolution of the tumour via follow-up studies correctly and is not taken into account by the RECIST criterion.

To facilitate the diagnosis of follow-up studies, the selection process of the lesions via a single mouse click or dragging action inside the tumour region, might be steered by warping the tumour region of a previous study (aligned with a deformable registration approach to the current one) into the current study, so that the user immediately can get an idea of the corresponding area where he should look for the tumour. In this way mistakes in the lesion labelling will also be avoided. Knowing exactly the segmentation parameters (e.g. RCAC, ...) and tissue parameters for the lesion in the previous study if they were stored together with other annotations, one could try to improve the above mentioned segmentation scheme, by looking automatically for a similar region in the current image and invoking segmentation algorithms with the appropriate parameters. In this way, the user could be able to segment the corresponding lesions with minimal interaction.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for acquiring information on lesions in 3D medical images comprising a body part and/or organ, comprising the steps of
- applying a registration technique to align a plurality of volumetric image data comprising the body part and/or organ, yielding multi-phase registered volumetric image data comprising the body part and/or organ,
- applying a multi-dimensional segmentation on the multi-phase registered volumetric image data, said segmentation yielding a plurality of clusters of multi-dimensional voxel vectors of the multi-phase registered volumetric image data,
- identifying the body part and/or organ as at least a part of a cluster or of a set of clusters of said plurality of clusters of multi-dimensional voxel vectors,
- acquiring information on lesions in the identified body part and/or organ.

2. Method as in claim 1, wherein the step of applying a segmentation further comprises a step of optimizing the segmentation into said plurality of clusters.

3. Method as in any of claim 1 or 2, wherein the step of applying a multi-dimensional segmentation is repeated for obtaining a refined segmentation.

4. Method as in claim 3, wherein morphological operations and/or active contours are applied on the result of the previous segmentation step before the segmentation is repeated.

5. Method as in any of claims 1 to 4, further comprising the step of selecting a region of interest for further analysis.

6. Method as in claim 5, wherein said selection is based on the acquired information on lesions in the body part and/or organ.

7. Method as in claim 5 or 6, further comprising the step of defining a viewport around said region of interest for visual assessment.

8. Method as in claim 7, further comprising the step of visualising said region of interest in said viewport at regular intervals or interactively.

9. Method as in any of claims 5 to 8, further comprising a step of selecting a predefined prototypical enhancement profile to compare said selected region with.

10. Method as in any of claims 5 to 9, wherein the further analysis comprises geometric analysis and/or radiometric analysis.

11. Method as in claim 10, wherein said geometric analysis comprises determining of said lesions the volume, diameter or perpendicular diameter.

12. Method as in claim 10, wherein said radiometric analysis comprises determining an intensity perfusion profile.

13. Method as in any of claims 5 to 12, wherein the selected region of interest comprises at least one spatially disconnected segment belonging to said organ or body part.

14. Method as in any of claims 5 to 13, further comprising the step of linking the selected region of interest to a corresponding region of interest in a previous study.

15. Method as in any of the previous claims, wherein the step of applying a multi-dimensional segmentation is performed with a multi-dimensional watershed algorithm.

16. Method as in any of the previous claims, wherein image data of at least two phases are combined.

17. Method as in any of the previous claims, wherein the body part and/or organ is the liver.

18. A program, executable on a programmable device containing instructions, which when executed, perform the method as in any of claims 1 to 17.

19. System for acquiring information on lesions in 3D medical images of a body region and/or organ, comprising registration means arranged for multi-phase registration of volumetric image data comprising the body part and/or organ and a segmentation unit for performing a multi-dimensional segmentation of said registered volumetric image data.

20. System as in claim 19, further comprising visualisation means arranged for displaying the registered volumetric image data.
